# EUROPÄISCHE PATENTSCHRIFT

(11) **EP 0 428 539 B1**
(45) Veröffentlichungstag und Bekanntmachung des Hinweises auf die Patenterteilung: **26.05.1993**
(21) Anmeldenummer: 89907749.9
(22) Anmeldetag: 06.07.1989
(51) Int. Cl.: F16C 33/12, C22C 32/00, B22F 1/00

(54) **VERFAHREN ZUM HERSTELLEN EINES RADIALLAGERS**
PROCESS FOR MANUFACTURING A RADIAL BEARING
PROCEDE POUR LA FABRICATION D'UN PALIER RADIAL

(30) Priorität: 06.07.1988 DE 3822919
(43) Veröffentlichungstag der Anmeldung: 29.05.1991
(73) Patentinhaber: INTERELECTRIC AG, CH-6072 Sachseln (CH)
(72) Erfinder: FÜTTERER, Bodo, CH-6005 Luzern (CH)
(74) Vertreter: Grünecker, Kinkeldey, Stockmair & Schwanhäusser Anwaltssozietät
(86) Internationale Anmeldenummer: EP8900777
(87) Internationale Veröffentlichungsnummer: WO9000685

(56) Entgegenhaltungen:
- FR-A- 1 445 542
- FR-A- 2 099 932
- US-A- 3 137 927
- US-A- 3 224 966
- Patent Abstracts of Japan, Vol 4, Nr 9 (M-089) 23 January 1980 & JP,A, 54148945 (NTN TOYO BEARING CO) 21 November 1979
- Patent Abstracts of Japan, Vol 12, Nr 21 (M-661)(2868) 22 January 1988 & JP,A, 62180117 (TOYOTA MOTOR CORP) 7 August 1987
- Patent Abstracts of Japan, Vol 7, Nr 285 (C-201)(1430), 20 December 1983 & JP,A, 58164662 (SONY) 29 September 1983

## Beschreibung

Die Erfindung bezieht sich auf ein Verfahren zum Herstellen eines eine Lagerbohrung zur Aufnahme einer Welle aufweisenden Radiallagers, bestehend aus in einer Metallmatrix eingelagerten harten Partikeln, wie z. B. Keramik oder dergleichen, wobei die harten Partikel einen Teil der Oberfläche der Lagerbohrung bilden.

Ein Verfahren zum Herstellen eines solchen Lagers ist in der DE-OS 21 31 148 beschrieben. Dort werden Diamantpartikel in eine Bronze- oder Kunststoffmatrix eingegossen, wonach dann die Diamanten geschliffen werden, um die Lagerbohrung auf das endgültige Maß zu bringen. Dieses Verfahren ist sehr aufwendig und teuer, da das Schleifen von Diamanten sehr harte und damit sehr teure Schleifwerkzeuge voraussetzt, die zudem einem hohen Verschleiß unterliegen, so daß die Werkzeuge häufig gewechselt werden müssen.

Weiterhin sind auch Sinterlager aus keramischen Werkstoffen bekannt, die zusammen mit Keramikwellen, z. B. aus Zirkoniumoxid, Siliziumnitrit oder Aluminiumoxid, eingesetzt werden. Die Materialpaarung Keramik-Keramik weist von Haus aus einen sehr geringen Reibungskoeffizienten auf, so daß sich mit dieser Lagerkombination eine verhältnismäßig hohe Lebensdauer erzielen läßt. Nachteilig ist jedoch auch hier, daß die Lagerbohrung der Keramiklager mit einem diamantbesetzten Schleifstift auf das Endmaß geschliffen werden muß, was aufgrund der geforderten Genauigkeit im µ-Bereich notwendig und aufgrund der Härte de: Keramikkörpers aufwendig ist. Daher sind diese Lager verhältnismäßig teuer, was trotz ihrer guten Lagereigenschaften einer großen Verbreitung entgegensteht.

Aus der US-A-31 37 927 ist ein Verfahren zur Herstellung eines Körpers, bestehend aus in einer Metallmatrix eingelagerten keramischen Partikeln, bekannt, wobei ein Metallpulver mit einem Keramikpulver gemischt und gesintert wird. Dieser Körper weist eine gewisse Porosität auf.

Der Erfindung liegt daher die Aufgabe zugrunde, ein Verfahren zum Herstellen eines Radiallagers anzugeben, das auf kostengünstige Weise die Herstellung eines Lagers ermöglicht, das ähnlich gute Eigenschaften aufweist wie die Keramiklager.

Diese Aufgabe wird erfindungsgemäß dadurch gelöst, daß man Metallpulver und höchstens 20 Gew.-% harte Partikel mischt, diese Mischung unter Einhaltung eines Porenvolumens von mindestens 15 % in eine dem Lager entsprechende Form preßt und den Preßling anschließend sintert, wonach man die Lagerbohrung ausschließlich durch Hindurchziehen eines Kalibrierdornes auf Endmaß kalibriert.

Durch das erfindungsgemäße Verfahren läßt sich auf kostengünstige Weise ein Lager herstellen, das an der Oberfläche der Lagerbohrung harte Partikel aufweist, welche mit der Welle
zusammenwirken, so daß die Materialpaarung zwischen der Welle und den harten Partikeln wie bei den Keramiklagern auch einen sehr geringen Reibungskoeffizienten aufweist.

Dennoch ist die Herstellung des Lagers wesentlich einfacher, da sich die an der Oberfläche der Lagerbohrung liegenden harten Partikel aufgrund der relativ weichen Metallmatrix beim Hindurchziehen des Kalibrierdornes drücken lassen, so daß die Lagerbohrung ohne irgendwelche Schleifarbeiten auf das Endmaß gebracht werden kann. Damit läßt sich eine erstaunlich schnelle und kostengünstige Fertigung hochpräziser Lager mit hoher Lebensdauer erreichen. Darüberhinaus weisen die nach dem erfindungsgemäßen Verfahren hergestellten Lager auch den Vorteil auf, daß die in den Lagern produzierte Wärme aufgrund der guten Wärmeleitfähigkeit der Metallmatrix schnell nach außen abgeführt werden kann. Hierbei kommt dem Lager auch das verhältnismäßig große Porenvolumen zugute, da das Lager mit öl getränkt werden kann, was die Wärmeleitfähigkeit noch weiter verbessert. Im üörigen bewirkt das Öl auch eine Dämpfung der Lagergeräusche.

Zwar ist es bereits bekannt, Radiallager aus Sinterbronze nach einem ähnlichen Verfahren herzustellen. Diese Lager weisen jedoch sehr viel schlechtere Lebensdauerwerte auf. Sinterbronzelager sind auf eine Ölfüllung angewiesen und laufen nur im stationären Betrieb einigermaßen verschleißarm. Bei Elektromotoren jedoch, die häufigen An- und Ausschaltvorgängen unterworfen sind, nimmt der Verschleiß der Bronzesinterlager enorm zu, so daß sie für diesen Zweck ungeeignet sind.

Für den Erfinder völlig überraschend war es, daß die nach dem erfindungsgemäßen Verfahren hergestellten Radiallager selbst dann eine sehr hohe Lebensdauer aufweisen, wenn der Anteil harter Partikel in der Metallmatrix im Bereich von 3 bis 10 % liegt. Dieser geringe Anteil harter Partikel in der homogenen Mischung aus harten Partikeln und Metallpulver führt zu einer Schonung der Formwerkzeuge beim Herstellen des Preßlings.

Ganz besonders bevorzugt wird ein Anteil an harten Partikeln von etwa 5 Gew.-%.

Eine besonders gute Nachgiebigkeit der letallmatrix, welche das Kalibrieren noch weiter erleichtert, wird erzielt, wenn das Porenvolumen des gesinterten Lagers etwa 20 bis 30 % beträgt.

Obwohl man auch Eisenpulver zur Herstellung der letallmatrix verwenden kann, wird in der Regel Bronzepulver bevorzugt.

Die harten Partikel können in bevorzugter Weise aus Aluminiumoxid, Siliziumnitrit oder einem anderen keramischen Werkstoff bestehen, obgleich auch Hartmetall in Frage kommt. Wichtig ist, daß die harten Partikel in Kombination mit der verwendeten Welle einen niedrigen Reibbeiwert aufweisen.

Die homogene Mischung aus Metallpulver und harten Partikeln läßt sich besonders dann einfach herstellen, wenn die Korngrößen der harten Partikel und des Metallpulvers etwa in der gleichen Größenordnung liegen. Die Korngrößen der eingelagerten Partikel liegen dabei vorzugsweise unter 50 µm.

Obwohl es für das Sintern und die feste Verbindung der eingelagerten harten Partikel mit der Metallmatrix günstiger ist, wenn die eingelagerten Partikel kantig sind, werden kugelförmige eingelagerte Partikel bevorzugt, da hierdurch die Lagerreibung weiter herabgesetzt werden kann.

Im folgenden wird die Erfindung anhand eines Beispieles näher erläutert.

Zur Herstellung des beispielhaft beschriebenen Lagers wird Bronzepulver mit einer Korngröße von 50 µm mit Kügelchen aus Siliziumnitrit mit einer Korngröße von 50 µm im Verhältnis 7 Volumenanteile zu 1 Volumenanteil gemischt; das entspricht einem Anteil an Siliziumnitrit von ungefähr 5 Gew.-%. Hierbei ist auf eine homogene Verteilung des Siliziumnitritpulvers zu achten.

Anschließend wird das Gemisch in eine dem herzustellenden Lager entsprechende Form gegeben und verpreßt. Nach dem Herausnehmen des Preßlings aus der Form wird dieser gesintert.

Der Sintervorgang läuft im wesentlichen so ab, wie bei herkömmlichen Sinterlagern aus Bronze.

Anschließend wird die Lagerbohrung des aus der Form genommenen Lagers, wie bei herkömmlichen Sinterlagern auch, kalibriert, indem durch die Lagerbohrung ein entsprechender Kalibrierdorn gezogen wird.

Nun wird das Lager im Vakuum mit öl getränkt, so daß in den Poren des Verbundwerkstoffes öl gespeichert wird; das Lager ist einsatzbereit.

Aus dem vorhergehenden wird deutlich, daß die Herstellung eines Lagers sehr einfach und im wesentlichen mit den gleichen Mitteln erfolgen kann, wie sie bei der Herstellung herkömmlicher Sinterlager verwendet werden. Dennoch weist ein solches Lager den entscheidenden Vorteil auf, daß auf der Innenoberfläche der Lagerbohrung eine harte Siliziumnitrittragschicht vorhanden ist, die zusammen mit der eingesetzten Keramikwelle für einen sehr geringen Reibungskoeffizienten sorgt. Mit und ohne Ölschmierung weist ein solches Lager daher eine verhältnismäßig hohe Lebensdauer auf, wodurch sich solche Lager auch für die Lagerung instationär bewegter Wellen mit häufigen Stopp- und Anlaufvorgängen eignen.

## Patentansprüche

1. Verfahren zum Herstellen eines eine Lagerbohrung zur Aufnahme einer Welle aufweisenden Radiallagers, bestehend aus in einer Metallmatrix eingelagerten harten Partikeln, wie z. B. Keramik, die einen Teil der Oberfläche der Lagerbohrung bilden, bei dem man Metallpulver und höchstens 20 Gew.-% harte Partikel mischt, diese Mischung unter Einhaltung eines Porenvolumens von mindestens 15 % in eine dem Lager entsprechende Form preßt und den Preßling anschließend sintert, wonach man die Lagerbohrung ausschließlich durch Hindurchziehen eines Kalibrierdornes auf Endmaß kalibriert.

2. Verfahren nach Anspruch 1, dadurch gekennzeichnet, daß die Mischung harte Partikel im Bereich von 3 bis 10 Gew.-% enthält.

3. Verfahren nach Anspruch 1 oder 2, dadurch gekennzeichnet, daß die Mischung 5 Gew.-% harte Partikel enthält.

4. Verfahren nach einem der Ansprüche 1 bis 3, dadurch gekennzeichnet, daß das Porenvolumen des gesinterten Lagers 20 bis 30 % beträgt.

5. Verfahren nach einem der Ansprüche 1 bis 4, dadurch gekennzeichnet, daß man Bronzepulver als Metallpulver verwendet.

6. Verfahren nach einem der Ansprüche 1 bis 5, dadurch gekennzeichnet, daß die harten Partikel aus Aluminiumoxid, Siliziumnitrit oder einem anderen keramischen Werkstoff bestehen.

7. Verfahren nach einem der Ansprüche 1 bis 5, dadurch gekennzeichnet, daß die harten Partikel aus Hartmetall bestehen.

8. Verfahren nach einem der Ansprüche 1 bis 7, dadurch gekennzeichnet, daß die Korngrößen der harten Partikel und des Metallpulvers etwa in der gleichen Größenordnung liegen.

9. Verfahren nach einem der Ansprüche 1 bis 8, dadurch gekennzeichnet, daß die Partikel im wesentlichen kugelförmig ausgebildet sind.

## Claims

1. Process for the production of a radial bearing which has a bearing hole to receive a shaft and consists of hard particles, such as, for example, ceramic, incorporated in a metal matrix, which particles form part of the surface of the bearing hole, in which method metal powder and at most 20% by weight of hard particles are mixed, this mixture is pressed into a mould corresponding to the bearing, retaining a pore volume of at least 15%, and the compact is then sintered, after which the bearing hole is calibrated to the final size exclusively by drawing through a calibrating mandrel.

2. Process according to Claim 1, characterised in that the mixture contains hard particles in the range of from 3 to 10% by weight.

3. Process according to Claim 1 or 2, characterised in that the mixture contains 5% by weight of hard particles.

4. Process according to one of Claims 1 to 3, characterised in that the pore volume of the sintered bearing is 20 to 30%.

5. Process according to one of Claims 1 to 4, characterised in that the metal powder used is bronze powder.

6. Process according to one of Claims 1 to 5, characterised in that the hard particles consist of aluminium oxide, silicon nitrite or another ceramic material.

7. Process according to one of Claims 1 to 5, characterised in that the hard particles consist of hard alloy.

8. Process according to one of Claims 1 to 7, characterised in that the particle sizes of the hard particles and of the metal powder are of approximately the same order of magnitude.

9. Process according to one of Claims 1 to 8, characterised in that the particles are essentially spherical in shape.

## Revendications

1. Procédé de fabrication d'un palier radial, présentant un alésage de palier destiné à recevoir un arbre, composé de particules dures, noyées dans une matrice métallique, telles que par exemple de la céramique, formant une partie de la surface de l'alésage de palier, pour lequel on mélange de la poudre métallique et des particules dures dont la proportion maximale est de 20 % en poids, on presse ce mélange dans un moule correspondant, tout en respectant un volume de pores d'au moins 15 % et l'on fritte ensuite l'ébauche, à la suite de quoi on effectue un calibrage à la cote finale de l'alésage de palier, exclusivement par pénétration d'un mandrin calibré.

2. Procédé selon la revendication 1, caractérisé en ce que le mélange contient des particules dures dans une proportion située dans la plage allant de 3 à 10 % en poids.

3. Procédé selon la revendication 1, caractérisé en ce que le mélange contient des particules dures dans une proportion de 5 % en poids.

4. Procédé selon l'une des revendications 1 à 3, caractérisé en ce que le volume des pores du palier fritté est compris dans la plage allant de 20 à 30 %.

5. Procédé selon l'une des revendications 1 à 4, caractérisé en ce que l'on utilise de la poudre de bronze à titre de matériau en poudre.

6. Procédé selon l'une des revendications 1 à 5, caractérisé en ce que les particules dures sont composées en oxyde d'aluminium, en nitrite d'aluminium ou en un autre matériau céramique.

7. Procédé selon l'une des revendications 1 à 5, caractérisé en ce que les particules dures sont en métal dur.

8. Procédé selon l'une des revendications 1 à 7, caractérisé en ce que les tailles granulaires des particules dures et de la poudre métallique sont situées à peu près dans le même ordre de grandeur.

9. Procédé selon l'une des revendications 1 à 8, caractérisé en ce que les particules sont réalisées avec une forme sensiblement sphérique.
